(19) Europäisches Patentamt
European Patent Office
Office européen des brevets

(11) Publication number: **0 407 582 A1**

(12) **EUROPEAN PATENT APPLICATION published in accordance with Art. 158(3) EPC**

(21) Application number: **89904877.1**

(22) Date of filing: **13.01.89**

(86) International application number: **PCT/SU89/00005**

(87) International publication number: **WO 90/08150 (26.07.90 90/17)**

(51) Int. Cl.5: **C07F 9/09**, C07F 9/24, A01N 57/28, A01N 57/30, A61K 31/675

(43) Date of publication of application: **16.01.91 Bulletin 91/03**

(84) Designated Contracting States: **CH DE FR GB IT LI NL**

(71) Applicant: **KIEVSKY NAUCHNO-ISSLEDOVATELSKY INSTITUT EPIDEMIOLOGII I INFEKTSIONNYKH BOLEZNEI IMENI L.V.GROMASCHEVSKOGO**
**supusk Stepana Razina, 4**
**Kiev, 252038(SU)**

(72) Inventor: **RUDAVSKY, Vladimir Panteleimonovich**
**ul. Bazhova, 10-42**
**Kiev, 252100(SU)**
Inventor: **KUCHEROVA, Margarita Nikolaevna**
**ul. Vetryanye gory, 10d-17**
**Kiev, 252123(SU)**
Inventor: **KUZNETSOVA, Natalia Anatolievna**
**ul. Ivana Nekhody, 5-39**
**Kiev, 252141(SU)**
Inventor: **SADOVSKAYA, Nina Pavlovna**
**ul. Planerskaya, 2/26-1**
**Kiev, 252061(SU)**
Inventor: **ZAGNIBIDA, Dmitry Makarovich**
**ul. Tropinina, 2/4-62**
**Kiev, 252107(SU)**
Inventor: **VIKTOROV-NABOKOV, Oleg Viktorovich**
**bulvar Koltsova, 3-51**
**Kiev, 252194(SU)**
Inventor: **SHABLOSVKAYA, Evgenia Alexandrovna**
**ul. Pochaininskaya, 35-22**
**Kiev, 252070(SU)**
Inventor: **STEPANCHUK, Valentin Andreevich**
**ul. Priozernaya, 12a-110**
**Kiev, 252211(SU)**
Inventor: **MATOSHKO, Galina Viktorovna**
**ul. Alexeevskaya, 2-37**
**Kiev, 252110(SU)**
Inventor: **GORELOV, Stanislav Anatolievich**
**ul. Tupoleva, 6-62**
**Kiev, 252049(SU)**
Inventor: **SMOLINA, Anna Iosifovna**
**ul. Kurnatovskogo, 22-120**
**Kiev, 252139(SU)**
Inventor: **NOVIKOV, Ivan Nikolaevich**
**Darnitsky bulvar, 3a-28**
**Kiev, 252192(SU)**
Inventor: **SHOMOVA, Evgenia Alexandrovna**
**ul. Darvina, 6-8**
**Kiev, 252004(SU)**
Inventor: **KUPRINA, Zhanna Stanislavovna**
**ul. Entuziastov, 29/2-112**
**Kiev, 252147(SU)**
Inventor: **BULGAKOV, Vsevolod Afanasievich**
**ul. Oktyabrskoi revoljutsii, 16-30**
**Kiev, 252021(SU)**
Inventor: **PONOMAREVA, Viktoria Efimovna**
**ul. Karla Marxa, 12-43**
**Kiev, 252001(SU)**
Inventor: **DANKO, Oleg Pavlovich**
**ul. Geroev Kosmosa, 1a-80**
**Kiev, 252148(SU)**

(74) Representative: **Spencer, Graham Easdale et al**
**A.A. Thornton & CO Northumberland House**
**303-306, High Holbornorn**
**London WC1V 7LE(GB)**

EP 0 407 582 A1

(54) **DERIVATIVES OF TRICHLOROPHOSPHASOCARBACYLS AND INSECTICIDAL, VIRICIDAL, HEMATOCIDAL, FUNGICIDAL AND OVOCIDAL PREPARATIONS BASED ON THEM.**

(57)

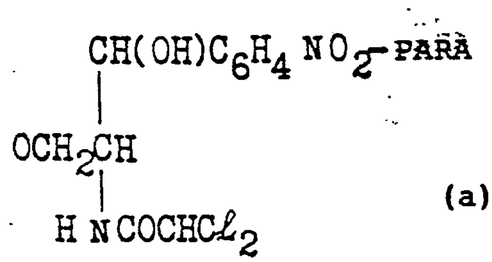

(a)

The derivatives of trichlorophosphasocarbacyls have the following general formula: RCON = $PX_3$, where R = $CCl_3$, $C_6H_5$, para-$BrC_6H_4$; X = $OCH_2CH_2Cl$, $OC(CH_3)_2CCl_3$, $OCH(C_6H_5)CH_2Cl$, a compound of formula (a), $NHC_6H_4OCH_3$-orto, $NHC_6H_4OC_2H_5$-para, $NHC_6H_4Cl$-orto, -meta, -para, $NHC_6H_4Br$-para, $NHC_6H_3NO_2$-orto-Cl-para. The claimed compounds have a biocide activity and are the active substances of insecticidal, viricidal, hematocidal, fungicidal and ovocidal preparations.

TITLE MODIFIE
see front page



# TRICHLOROPHOSPHAZOCARBACYL DERIVATIVES AND INSECTICIDAL, VIRUCIDAL, NEMATOCIDAL, FUNGICIDAL AND OVOCIDAL COMPOSITIONS BASED THEREON

## Field of the Invention

The present invention relates to organic chemistry, and, more particularly, it relates to novel compounds, namely, trichlorophosphazocarbacyl derivatives and insecticidal, virucidal, nematocidal, fungicidal and ovocidal compositions based thereon.

## Prior Art

Various compounds are known to have a biocidal activity, which are useful as active principles for insecticidal, virucidal, nematocidal, fungicidal and ovocidal compositions. Thus, for example, 0,0-dimethyl(1-hydroxy-2,2,2-trichloroethyl) phosphonate is known to be an active principle of an insecticidal composition (chlorophos, divon, dilox, trichlorophen). The composition is ised as a 0.1 - 0.3% aqueous solution in the form as of aerosol (Spravochnik po pestitsydam. Moscow: Khimia, 1985).

This preparation is unstable, it is quickly decomposed by light and in an alkaline medium by action of reducing agents, therefore to attain an effect. It is necessary that the preparation be applied again in 3 - 5 days. Using the preparation is unsafety for a human being because of its toxicity ($LD_{50}$ for mice and rats is of 225 - 1200 mg/kg) and an irritative action. The repeated application of the preparation takes a lot of labour and time, and is not always effective since insects acquire tolerance to the preparation. Furthermore, after its application an unpleasant sharp suffocating scent keeps for a long time.

Well known in the art is the use of sodium N-chlorobenzene sulphonamide as an active principle of a virucidal composition. The composition is used as a 1 - 3% aqueous solution of sodium N-chlorobenzene sulphoamide. The composition is used for desinfection of premises, implements, dishware, hands, medicinal instruments, clothes, sewage waters, domestic wastes and other garbages, virologic isolation hospitals, veterinary hospitals and virus infection loci. The use of the composition, however, is not always efficient because this compound is unstable in aqueous solutions; it has a pungent suffocating scent and irritates mucosas of respiratory organs, eyes, a skin coat that are accompanied by lacrimation, sharp pains in eyes, rhinitis, peeling the skin, progressive headaches. All these limit the application of the composition, especially in pulmonological and other medicinal institutions. Moreover, in carrying out the treatment with chloroamine it is necessary that respiratory organs, the skin of hands be protected as well as special conditions for its storage be set up because it is decomposed by light releasing a free chlorine. The composition has a pronounced corrosive properties.

A fungicidal composition is known to contain 2,3-dichloronaphthoquinone-1,4 (phygon) as an active principle used to control against phytopathogenic fungi of agricultural plants such as apples, peaches, cherries, beans, tomatoes, rice (Spravochnik po pestitsidam. Moscow: Khimia, 1985). This compound is substantially insoluble in water, sparingly in acetone, benzene. It is mainly produced in the form of a 50 or 4 % powdery composition containing a filler for dressing seeds. The composition irritates mucous and skin coats and it is also of a toxic character.

Known in the art is the use of a fungicidal composition containing zinc N,N'-ethylene-bis-dithiocarbamate (zineb) as an active principle to control against phytopathogenic fungi of agrocultural crops such as apples, pears, plums and the like as well as potato, tomatoes, cucumbers (Spravochnik po pestitsidam. Moscow: Khimia, 1985). The composition is applied by spraying onto fruit and vegetable crops affected with phytopathogenic fungi.

The rate of its application os of 1.9 to 6.4 kg/ha. This composition is toxic and irritates skin and mucous

coats. The composition is produced by using a complicated manufacturing process that makes it economically inefficient.

Well known in the art is the use of a fungicidal composition containing thiuram as an active principle to control against phytopathogenic fungi (Spravochnik po pestitsidam. Moscow: Khimia, 1985). The composition is used as a seed dresser from fungi and pathogenes of cereal, grain legumes, industrial and vegetable crops, drug and flower plants in an application rate of 1.2 to 6.4 kg/ha. The composition is toxic and irritates skin and mucous coats. A residual content of the composition is unpermissible in food products and a forage fodder.

A nematocidal composition is known to contain 0,0-dimethyl-0-/2,2-dichlorovinyl/phosphate (N.N.Melnikov "Khimia i tekhnologia pestitsidov". Moscow: Khimia, 1975, p.488). The composition is used as a 1% aqueous solution. The composition is used for controlling nematodes of tomatoes, cucumbers. The composition is of a contact action, unstable in environmental conditions; it is substantially used for treating plants affected by nematodes in greenhouses.

Known in the art is an ovocidal composition containing sodium N-methyldithiocarbamate dihydrate (carbathion) as an active principle. The composition is used as a 40% aqueous solution for soil sterilization to control soil pests (nematodes, microorganisms, insects) of vegetable and ornamental plants and as a 3% acqueous solution for soil disinvasion. The composition is used in combination with a stabilizing agent, namely, a tertiary amine. The composition has an unpleasant strong odour and irritates mucous coats of upper respiratory passages.

## Disclosure of the Invention

Trichlorophosphazocarbacyl derivatives, according to the invention, and insecticidal, virucidal, nematocidal, fungicidal and ovocidal compositions based thereon are novel and have not been reported.

The invention is based on the problem of providing novel compounds and biocidal compositions based thereon having a high insecticidal, virucidal, nematocidal, fungicidal and ovocidal activity, low toxicity, stable under storage and application, having no side-effects, well soluble in water and other solvents, having a wide range of action and obtained by a simple production process.

The problem is solved by providing, according to the invention, of the general formula:

$$RCOH=PX_3$$

wherein R is $CCl_3$, $C_6H_5$; X is $OCH_2CH_2Cl$, $OC(CH_3)_2CCl_3$, $OCH(C_6H_5)CH_2Cl$,

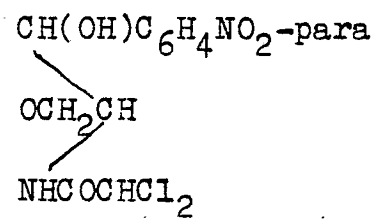

where when X is $NHC_6H_3NO_2$-ortho-Cl-para; R is para-$BrC_6H_4$.

The novel compounds of the present invention exhibit a high biocidal activity, a stable effect, a low toxicity ($LD_{50}$ is of 800 to 1200 mg/kg of an animal weight), have no unpleasant odour and irritating action on a skin coat, the mucosas of eyes and respiratory passages. The compounds, according to the invention, have a wide range of action to various biological objects and are active principles of insecticidal, virucidal, nematocidal, fungicidal and ovocidal compositions.

An insecticidal composition of the invention comprising an active principle and a solvent contains as an active principle trichlorophosphazocarbacyl derivatives of the general formula:

$$RCON=PX_3 ,$$

wherein R is $C_6H_5$; X is $OCH_2CH_2Cl$, $OC(CH_3)_2CCl_3$.

An insecticidal composition of the invention is characterized by a high activity, a stable effect, a low toxicity, having no unpleasant odour and irritating action on

the mucosas of eyes or respiratory passages as well as a skin coat. According to the invention, the composition preferably contains an active principle in an amount of 0.25 % by mass, and as a solvent it preferably contains a 5% aqueous solution of saccharose or glucose.

A virucidal composition, according to the invention, comprising an active principle and a solvent contains as an active principle trichlorophosphazobenzoyl derivatives of the general formula:

$$C_6H_5CON{=}PX_3,$$

wherein X is $OCH(C_6H_5)CH_2Cl$,

$$\begin{array}{l} \quad\ \ CH(OH)C_6H_4NO_2\text{-para} \\ \quad\ \ | \\ OCH_2CH \\ \quad\ \ | \\ \quad\ \ NHCOCHCl_2 \end{array}.$$

A virucidal composition, according to the invention, preferably contains an active principle in an amount of 1 % by mass, and as a solvent it preferably contains a 85% solution of sodium chloride.

A virucidal composition of the invention has a high virucidal activity to hepatitis B virus, influenza viruses as well as to other viruses. The composition has a low toxicity ($LD_{50}$ for chicken embryos is of 800 mg/kg of a body weight). A virucidal composition of the invention has no an unpleasant odour and irritating action on the skin, mucosas of eyes and respiratory tracts.

A nematocidal composition of the invention comprising an active principle and a solvent contains as an active principle tris-/2-chloro-1-phenylethoxy/phosphazobenzoyl of the following formula:

$$C_6H_5CON = P - \left[\begin{array}{l} \ \ C_6H_5 \\ OCH \\ \ \ CH_2Cl \end{array}\right]_3$$

A nematocidal composition of the invention contains an active principle preferably in an amount of 1 % by mass, and as a solvent it contains water.

A nematocidal composition of the invention has a high nematocidal activity, causing no phytocidal effects and it has a stable action.

A fungicidal composition of the invention comprising an active principle and a solvent contains as an active principle trichlorophosphazocarbacyl derivatives of the general formula:

$$RCON=PX_3$$

wherein R is para-$BrC_6H_4$, $NHC_6H_3NO_2$-ortho-Cl-para.

A fungicidal composition, according to the invention, contains an active principle in an amount of 0.01 % by weight and as a solvent it preferably contains water.

An ovocidal composition of the invention comprising an active principle and a solvent contains as an active principle trichlorophosphazocarbacyl derivatives of the general formula:

$$RCON=PX_3$$

wherein R is $CCl_3$, $C_6H_5$; X is $OCH(C_6H_5)CH_2C$,

$CH(OH)C_6H_4NO_2$- para
|
$OCH_2CH$
|
$HNCOCHCl_2$

An ovocidal composition, according to the invention, contains an active principle preferably in an amount of from 2 to 3 % by mass and as a solvent it preferably contains water.

Description of the Preferred Embodiment

The novel compounds of the present invention, namely, trichlorophosphazocarbacyl derivatives are crystalline substances or yellow viscous liquids, soluble in water, alcohols, acetone, benzene, toluene and other organic solvents.

In taking IR spectra of the compounds, according to the invention, the following absorption bands are characteristic: N=P 1320 - 1355 $cm^{-1}$; C=O 1620 - 1660 $cm^{-1}$, $^{31}P$ NMR spectrum 1.94 - 1.96 ppm; UV spectrum 250-252 nm.

The compounds of the invention have an insecticidal, virucidal, nematocidal, ovocidal and fungicidal activity. These properties of the compounds, according to the invention, have been proved in biological tests by a direct contact of synanthropic insects, viruses, nematodes, helminthic ovigerms and phytopathogenic fungi with solutions of the claimed compositions. The compositions of the invention cause death of domestic flies, cockroaches and other synanthropic insects; entheroviruses, hepatitis B viruses, influenza viruses and other pathogenes, helminthic ovigerms and larvae causing diseases of human beings and animals as well as farm crops such as cucumbers, tomatoes and phytopathogenic fungi Fusarium oxysporum, Fusarium moniliforme, Botrytis cinerea, Fusarium culmorum, Diplodia zeae, Rhyzoctonia violacea, Verticillium alboartrum, Verturia inaequalis, Rhyzoctonia aderholdii which affect potato, sugar beet, cotton seeds and the like.

The compounds of the invention are obtained by a simple production process. The novel compounds, according to the invention, namely, trichlorophosphazocarbacyl derivatives are phosphazocarbacyl ethers and amides. They are obtained by reacting trichlorophosphazocarbacyls with alcohols in the ratio of 1:3 in the presence of a base. To obtain amides of phosphazocarbacyls, trichlorophosphazocarbacyls are reacted with amines in the ratio of 1:6 in the benzene solution. The resultant reaction mixture is allowed to stay for a long time at room temperature or is refluxed for 1 hour. Thereafter, hydrochloride of amine or triethylamine and benzene are removed from the reaction mixture. The desired product is obtained in the form of a crystalline mass or a yellow viscous liquid, which is well-soluble in water, alcohols, acetone, benzene, toluene and other organic solvents and stable in solutions.

For a better understanding of the present invention, the following examples illustrating the preparation of the

novel compounds, according to the invention, compositions based thereon and tests of their activity are given hereinbelow.

Example 1

To a solution containing 0.03 mol of 2-chloroethyl alcohol and 0.03 mol of triethylamine in 30 ml of benzene, 0.01 mol of trichlorophosphazobenzoyl solution in 20 ml of benzene was added under continuous stirring. The reaction mixture was allowed to stay for 24 hours at 20 °C. The precipitated triethylamine hydrochloride was removed in vacuum. The residue as a viscous yellow liquid was purified by reprecipitating it from a benzene solution with petroleum ether in the presence of charcoal. The end product - tris-(2-chloroethoxy)phosphazobenzoyl of the following formula: $C_6H_5CON{=}P(OCH_2CH_2Cl)_3$ was obtained, soluble in water, alcohols, toluene. The yield of the end product was 93 % by mass.

Found, %: C 40.12, H 4.38, Cl 27.40, N 3.72, P 7.84.

$C_{13}H_{17}Cl_3O_4P$.

Calculated, %: C 40.18, H 4.41, Cl 27.40, N 3.60, P 7.96.

IR spectrum for N=P 1325 $cm^{-1}$, C=O 1620 $cm^{-1}$.

$^{31}P$ NMR spectrum 1.96 ppm.

The compound had an insecticidal activity. An insecticidal composition based thereon, which was a 0.25% solution of this compound in a 5% aqueous glucose solution, was prepared. The laboratory and large-scale tests of the activity of an insecticidal composition of the invention was conducted on domestic flies. For laboratory tests into the gauze-made boxes (10x10 cm, 6 boxes), there were placed 6-7-day flies of both sexes by 50 individuals per each box. Into 5 boxes there were placed Petri dishes containing the insecticidal composition of the invention. The death rate of flies was estimated in 48 - 72 hours. A Petri dish containing a 5% aqueous solution of glucose was placed into the control box. The insecticidal activity of the composition, according to the invention, was tested in comparison

with a known insecticidal composition containing O,O-dimethyl-/1-hydroxy-2,2-trichloroethyl/phosphonate.

The large-scale tests of the activity of the insecticidal composition, according to the invention, was conducted on domestic flies in living and industrial premises. Petri dishes containing a 0.25% aqueous solution of the insecticide, according to the invention, added with a 5% glucose solution, were put at a rate of 2-3 dishes per 20 $m^2$. The activity of the composition of the invention was estimated by a direct count of dead insects in 72 hours or by using the adhesive tapes, counting the number of flies on the tape prior and after carrying out the test. The test results are given in Table 1 hereinbelow.

Example 2

The process was carried out in a manner similar to that of Example 1. The starting compound was dimethyl-2,2,2--trichloroethyl alcohol. As a result, the end product tris-(dimethyl-2,2,2-trichloroethoxy)phosphazobenzoyl was obtained, of the formula:

$$C_6H_5CON=P\left[OC(CH_3)_2CCl_3\right]_3 ,$$

which was a viscous liquid, soluble in water, alcohols, acetone, benzene, toluene. The yield of the end product was of 78 % by mass.

Found, %: C 33.49, H 3.42, Cl 46.65, N 2.00, P 4.46

$$C_{19}H_{23}C_9NO_4P.$$

Calculated, %: C 33.59, H 3.40, Cl 46.96, N 2.06, P 4.55. IR spectrum for N=P 1320 $cm^{-1}$, C=O 1650 $cm^{-1}$; $^{31}P$ NMR spectrum 1.94 ppm; UV spectrum 250 nm.

The compound obtained exhibited an insecticidal activity. The tests of the composition based on the compound of the invention were carried out in a manner similar to that described in Example 1. The test results are given in the following Table 1.

Example 3

The process was carried out in a manner similar to that of Example 1. The starting compound was 2-chloro-1--phenyl ethanol. As a result, the end product was obtained, namely, tris/2-chloro-1-phenylethoxy/phosphazobenzoyl of the formula:

$$C_6H_5CON{=}P\left[OCH(C_6H_5)CH_2Cl\right]_3$$

which was a viscous yellow liquid, soluble in water, alcohols, acetone, benzene, toluene. The yield of the end product was of 71 % by mass.

Found, %: C 61.32, H 4.92, Cl 17.27, N 2.30, P 4.98.

$C_{31}H_{29}Cl_3NO_4P$.

Calculated, %: C 60.36, H 4.74, Cl 17.23, N 2.27, P 5.02.

$n_D^{20}$ = 1,4910, $d_4^{20}$ = 1,4120.

IR spectrum for N=P 1340 $cm^{-1}$, C=O 1650 $cm^{-1}$.

$^{31}P$ NMR spectrum 1.96 ppm; UV spectrum 252 nm.

The compound obtained had an insecticidal activity. The insecticidal activity of the composition containing the compound of the invention was tested in a manner similar to that described in Example 1. The test results are given in the following Table 1.

Table 1

Insecticidal activity of the composition, according to the invention, as compared with a known composition and control

| No. | Composition | Death of flies, % Tests: laboratory | Death of flies, % Tests: large-scale |
|---|---|---|---|
| 1 | Composition of the invention: | | |
| | Example 1 | 86 | 85 |
| | Example 2 | 90 | 88 |
| | Example 3 | 100 | 100 |
| 2 | Known insecticidal composition | 85 | 83 |
| 3 | Control | 0 | 0 |

Example 4

The process was conducted in a manner similar to that described in Example 1. The starting compound was d/--/threo-1-para-nitrophenyl-2-dichloroacetamido-1,3-propandiole. The end product tris-d/-/-threo-3-para nitrophenyl--2-dichloroacetamido-3-hydroxypropoxy/phosphazobenzoyl of the formula:

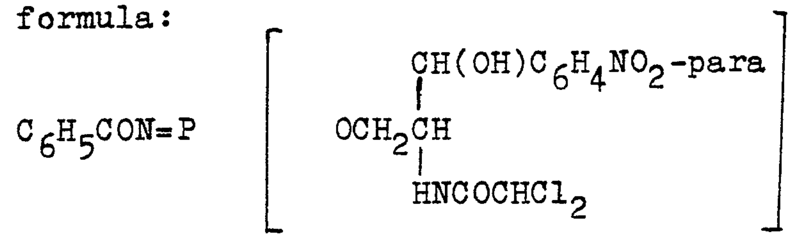

which was a crystalline yellow substance. The yield of the end product was of 92 % by mass, m.p. 118 - 120 °C.

Found, %: C 42.27, H 3.70, Cl 19.48, N 8.41, P 2.80.

$C_{40}H_{38}Cl_6N_7O_{16}$.

Calculated, %: C 43.04, H 3.45, Cl 19.04, N 8.77, P 2.77. IR spectrum for N=P 1350 $cm^{-1}$, C=O 1660 $cm^{-1}$.

The compound obtained had a virucidal activity. Based on the compound there was prepared a virucidal composition which was a 1% solution of the compound in a 0.85% solution of sodium chloride. A virucidal activity of the composition, according to the invention, was tested against hepatitis B virus and influenza A virus causing the large-scale breakouts of human virus infections. For tests, a virucidal composition of the invention was added to blood serum of a patient or a hepatitis B virus carrier with the original HBs Ag titer of 1:3-1:64. After exposing it for 5,30, 60 minutes HBs Ag titer was determined by a conventional immunoassay using serial dilutions with test antigen-antibody system. Th the control sera samples there was added a 0.85% solution of sodium chloride at a corresponding ratio instead of the test composition. The virucide activity of the composition, according to the invention, to hepatitis B viruses was tested as compared with a known composition containing sodium N-chlorobenzene sulfonic amide.

The virucidal activity of the composition, according

to the invention against influenza viruses was tested in a similar manner, to a virus-containing allantoic fluid a 1% solution of the composition of the invention was added, and the virus titer was determined by a conventional method using hemagglutination-inhibition reaction. The activity of the composition, according to the invention, was tested as compared with the known composition. The test results of the virucidal activity of the composition of the invention are given in Table 2.

Table 2

Virucidal activity of the composition, according to the invention to hepatitis B and influenza A viruses as compared with a known composition (5 inhibition of viral antigen titers)

| No. | Composition | Hepatitis B virus | Influenza A virus |
|---|---|---|---|
| 1 | Composition of the invention: Example 4 | 100 | 100 |
| 2 | Known virucidal preparation: sodium-N-chlorobenzene sulfamide | 50 | 50 |
| 3 | Control | 0 | 0 |

Example 5

The process was carried out in manner similar to that described in Example 3. As a result, the end product, namely, tris-(2-chloro-1-phenylethoxy)phosphazobenzoyl was obtained which had an insecticidal, nematocidal, virucidal and ovocidal activity. The insecticidal activity was tested in a manner similar to that described in Example 3. A nematocidal composition based on the compound was prepared which was its 1% solution in water. A nematocidal effect of the composition was tested in laboratory conditions to the invasion larvae of a root-knot nematode. For testing

it, one drop of a suspension containing 100 invasion larvae of root-knot nematodes was placed onto the cover glasses having cells. Thereafter, one drop of the nematocidal composition of the invention was put thereto. One drop of distilled water instead of the test composition was placed into the control cell. The glasses with test and control cells were put on a moisten ashless filter of a Petri dish, and 24 hrs later the killed nematodes were registered. The tests were repeated three times. The nematocidal activity of the composition, according to the invention was tested in comparison with the known nematocidal preparation containing O,O-dimethyl-O-2,2/dichlorovinyl/phosphate. The field tests were carried out at the 5 $m^2$ plots affected by tomato nematodes. For testing it, the plots were treated with the nematocidal composition of the invention and the known nematocidal composition. The test results are shown in Table 3 hereinbelow. As a result of the tests, the composition of the invention was discovered to have no phytotoxic effects on the leaves of tomatoes and cucumbers.

Based on the compound there was prepared a virucidal composition in the form of a 1% solution thereof in a 0.85% solution of sodium chloride. The virucidal activity of this composition was tested to hepatitis B virus, influenza A virus and poliomyelitis viruses.

The study of a virucidal activity to hepatitis B virus was carried out by a suspension method under a protein loading. A virus-containing fluid was blood serum of a patient suffered with hepatitis B at the initial antigen titer of 1:64. The composition of the invention was added thereto. After a 15-, 30- and 60 minutes exposure, the antigen titer of hepatitis B virus was determined by using serial dilutions following a counter-current immunoelectrophoresis procedure. The control was the same serum of the patient, but instead of the composition of the invention an equal volume of a 0.85% solution of sodium chloride was added thereto. A 0.1% sulphanole solution was used as a

neutralizing agent. The test results are given in Table 4.

The virucidal activity of the composition, according to the invention, to influenza A virus was tested as follows.

To a virus-containing allantoic fluid (the strain of influenza A1 virus) the composition of the invention was added. The initial virus titer was of 1:128 for hemagglutination reaction. After a 15-, 30- and 60-minutes exposure a neutralizing agent (0.1% sulphanole solution) was added thereto. To determine the titer of influenza virus by using hemagglutination reaction with a 1% suspension of chicken red blood cells, different dilutions of the virus-containing fluid were prepared. The control was the identical sample of the virus-containing allantoic fluid to which an equal volume pf a 0.85% solution of sodium chloride was added instead of the composition, according to the invention. The test results are given in Table 4.

The virucidal activity of the composition, according to the invention, to poliomyelitis virus was tested on the model of poliomyelitis-II virus-carrying strain which related to highly resistive viruses. The viruses were incubated in the transferred Hep-2 cell cultures. As a material, a virus-containing fluid having the infectivity titer of $10^{-4}$ cells was used. The activity of the composition of the invention was determined to poliomyelitis viruses which were fixed on the lawn test-objects. The composition of the invention was used at a rate of 1 ml per each test--object.

The infected test objects were immersed into the prepared composition at a rate of 5 objects per each exposure. After 10-, 30- and 60-minutes' exposure the test objects were taken out with sterile pincers and placed into a tube containing 5 ml of a sterile solution of a neutralizing agent (a 0.2% sulphanole solution or a 10% solution of milk) for 5 minutes. The test objects were transferred by sterile loop into the glass beads-filled tube containing 5 ml of Henks sterile solution followed by agitating it

for 10 minutes. Thereafter, 0.2 ml of liquid washed away from the test objects and 1 ml of a maintenance medium were added into each tube containing a cell culture. The tubes placed into a thermostat at 37 °C for observation period. In a day the maintenance medium was changed.

In case a cytopathogenic action in cells was absent, a further infection of a cell culture was carried out. If a cytopathogenic effect was absent the virus was considered to be inactivated.

The test was accompanied by the following controls: control for test object infectivity; control for keeping the virus vitality as a result of a neutralizing agent action; control for neutralization completeness of a disinfectant; cell culture control. The test results are given in Table 1.

An ovocidal composition based on this compound was prepared in the form of a 2% solution thereof in distilled water. An ovocidal activity of the composition, according to the invention, was tested as follows.

For a test object there were used pig ascarid ovigerms as the most stable among helminthic ovicells to environmental factors. A drop of a suspension containing at least 1.000 ascarid ovigerms was placed onto the watch glasses followed by adding thereto by 1 ml of the composition of the invention. Thereafter the watch glasses were put them into a humid chamber of a thermostat at a temperature of 24 - 26 °C. In every 4 hours the watch glasses with ascarid ovigerms and with the composition of the invention were withdrawn from the thermostat and washed with distilled water for 2-3 times.

Then, the washed ascaride ovigerms were cultured for 30 days at a temperature of 24 - 26 °C. To determine the number of dead and viable ovigerms 200 ova were visualized under a microscope in every 3-5 days. Their death was determined by lack of the development of ovigerms up to the stage of larva and the presence of destructive morphological changes for 30 days. An ovocidal activity of known composition based on carbathion was determined by the same procedure. Control was carried out under the same conditions by adding a physiological saly solution. The death percentage of ova was estimated as a mean value of three results with the correction for death of ovigerms in the control and in comparison with the known compositions. The test results of an ovocidal activity are given in Table 5 hereinbelow.

Table 3

Effects of the nematocidal composition of the invention and a known composition to gall nematodes

| No. | Composition | Larva death, % | |
|---|---|---|---|
| | | Tests | |
| | | laboratory | field |
| 1 | Composition of the invention: | | |
| | Example 5 | 100 | 100 |
| 2 | Known nematocidal preparation | 88.1 | 76 |
| 3 | Control | 0 | 0 |

Table 4

Virucidal activity of the composition, according to the invention, to viruses of hepatitis B, influenza A and poliomyelitis

| No. | Composition | Concentration, % | Death of viruses (%) under exposure, min | | | | | | | | |
|---|---|---|---|---|---|---|---|---|---|---|---|
| | | | Hepatitis B | | | Influenza A | | | Poliomyelitis | | |
| | | | 15 | 30 | 60 | 15 | 30 | 60 | 10 | 30 | 60 |
| 1 | Composition of the invention: | | | | | | | | | | |
| | Example 5 | 1 | 75 | 100 | 100 | 30 | 50 | 100 | 20 | 50 | 70 |
| 2 | Known virucidal preparation - sodium N-chlorobenzene sulfamide | 1 | 0 | 12.5 | 25 | 0 | 12.5 | 25 | 0 | 12.5 | 25 |

Table 5

An ovocidal activity of the composition, according to the invention

| No. | Composition | Concentration, % | Death of ascarid ovigerms (%) in | | |
|---|---|---|---|---|---|
| | | | 24 h | 48 h | 72 h |
| 1 | Composition of the invention: | | | | |
| | Example 5 | 2 | 68.1 | 93.4 | 100 |
| 2 | Known ovocidal preparation - carbathion | 2 | 60 | 80 | |

Example 6

The process was carried out in a manner similar to that described in Example 3 hereinbefore. As a starting compound use was made of 0.06 mol of para-chloro-ortho-nitroaniline. As a result, the end product, was obtained, namely, tris-(para-chloro-ortho-nitroanilido)phosphazo-para-bromobenzoyl, was obtained, of the formula: para-$BrC_6H_4CON=P(NHC_6H_3NO_2$-ortho-Cl-para$)_3$ as a yellow crystalline mass, soluble in water, acetone, alcohols, benzene. The yield of the end product was 76 % by mass, m.p. 124 - 126 °C.

Found, %: C 40.26, H 2.08, N 12.99, P 4.21.

$C_{25}H_{16}BrCl_3N_7O_7P$.

Calculated, %: C 40.38, H 2.16, N 13.18, P 4.16.
IR spectrum for N=P 1340 $cm^{-1}$, C=O 1635 $cm^{-1}$.

The resulting compound had a fungicidal activity. Based on the compound, a fungicidal composition was prepared in the form of a 0.01% solution thereof in distilled water. A fungicidal activity of the compound, according to the invention, was tested for inhibition of vegetative fungi growth such as Fusarium oxyporum, Fusarium moniliforme, Botrytis cinerea, Fusarium culmorum, Diplodia zeae, Rhyzoctonia violacea, Verticillium alboartrum, Verturia inaequalis, Rhyzoctonia aderholdii affecting potato, sugar beet, cotton seeds. The tests were conducted either in laboratory or in field conditions. For tests, the composition of the invention containing 0.01 % by mass of an active principle was introduced into Petri dishes with a nutrient medium, specifically, potato-dextrose agar. The phytopathogenic fungi mycelium was plated on the Petri dishes with this agar culture. The phytopathogenic fungi were plated on control dishes with agar culture without adding the composition of the invention. The fungicidal action of the composition, according to the invention, was tested in comparison with the known fungicidal composition based on 2,3-dichloronaphthoquinone-1,4 (phygon), zinc N,N'-ethylene-bis-(dithiocarbamate) (zineb) and thiuram.

In the field conditions potato plantations of 5 $m^2$ in size affected by Fusarium oxysporem, Fusarium moniliforme, Betrytis cinerea, Fusarium culmorum, Diplodia Verturia inaequalis, Rhyzoctonia aderholdii were sprayed by a fungicidal composition of the invention.

For comparison, a similar spraying of the affected potato plots was carried out using a known fungicidal compositions. The test results are given in Table 6 hereinbelow.

Example 7

The process was carried out in a manner similar to that described in Example 1. As starting compounds use was made of trichlorophosphazotrichloroacetyl and d(-)-threo-1-para-nitrophenyl-2-dichloroacetamido-1,3-propandiole. As a result, the end product was obtained, namely d(-)-threo-3-para-nitrophenyl-2-dichloroacetamido-3-hydroxypropoxyphosphazotrichloroacetyl, of the formula:

$CH(OH)C_6H_4NO_2$-para
|
$CCl_3CON=P$ $OCH_2CH$
|
$HNCOCHCl_2$ ,

a yellow crystalline substance, soluble in water, alcohols, acetone, benzene, toluene. The yield of the end product was 91 % by mass, m.p. 118 - 120 °C.

Table 6

Fungicidal activity of the composition, according to the invention, in comparison with a known preparation (phygon)

| No. | Composition | Inhibition of colony growth of phytopathogenic fungi, % | | | | | |
|---|---|---|---|---|---|---|---|
| | | Fusarium oxysporum | | Fusarium moniliforme | | Botrytis cinerea | |
| | | Tests | | | | | |
| | | laboratory | field | laboratory | field | laboratory | field |
| 1 | 2 | 3 | 4 | 5 | 6 | 7 | 8 |
| 1 | Composition of the invention: Example 6 | 100 | 100 | 100 | 100 | 100 | 100 |
| 2 | Known composition (phygon) | 35 | 30 | 35 | 32 | 38 | 32 |
| 3 | Known composition (zineb) | 58 | 59 | 60 | 62 | 100 | 98 |
| 4 | Control | 0 | 0 | 0 | 0 | 0 | 0 |

Table 6 (continued)

| No. | Inhibition of colony growth of phytopatogenic, fungi, % | | | | | |
|---|---|---|---|---|---|---|
| | Fusarium culmorum | | Diplidia zeae | | Rhyzoctonia violacea | |
| | Tests | | | | | |
| | laboratory | field | laboratory | field | laboratory | field |
| 1 | 9 | 10 | 11 | 12 | 13 | 14 |
| 1 | 70 | 69 | 100 | 100 | 100 | 100 |
| 2 | 57 | 45 | 71 | 81 | 34 | 33 |
| 3 | 57 | 54 | 100 | 100 | 100 | 100 |
| 4 | 0 | 0 | 0 | 0 | 0 | 0 |

Table 6 (continued)

| No. | Inhibition of colony growth of phytopathogenic fungi,% | | | | | |
|---|---|---|---|---|---|---|
| | Verticillium albo-atrum | | Verturia inaequalis | | Rhyzoctonia aderholdii | |
| | labora-tory | field | labora-tory | field | labora-tory | field |
| 1 | 15 | 16 | 17 | 18 | 19 | 20 |
| 1 | 100 | 100 | 100 | 100 | 100 | 100 |
| 2 | 63 | 66 | 58 | 61 | 54 | 55 |
| 3 | 80 | 78 | 100 | 98 | 100 | 100 |
| 4 | 0 | 0 | 0 | 0 | 0 | 0 |

Found, %: C 36.22, H 2.79, Cl 27.62, N 8.45, P 2.22.

$C_{35}H_{33}Cl_9N_7O_{16}P$.

Calculated, %: C 36.31, H 2.87, Cl 27.56, N 8.46, P 2.67. IR spectrum for N=P 1320 $cm^{-1}$, C=O 1650 $cm^{-1}$.

The compound obtained exhibited an ovocidal activity. Based on this compound, there was prepared the ovocidal composition in the form of 3% solution thereof. The ovocidal activity of the composition, according to the invention, was tested disinfection of ambient objects (equipment, tableware, hands). For this purpose, a 3% aqueous solution of the compound, according to the invention, was used for treating said objects. The efficiency of the ovocidal action was determined by the number of helminthic ova in washings from the ambient objects before and after treating them with the ovocidal composition of the invention.

As a test object, use was made of pig ascaride ovigerms as the most stable among helminths in environmental conditions. A drop of a suspension containing at least 1,000 ascarid ovigerms was placed onto watch glasses followed by adding one droplet of a 3% solution of the composition of the invention. Thereafter, they were put into a humid chamber of a thermostat at a temperature of 24-26 °C.

In every 24 hours during 3 days the watch glasses with ascarid ova and the composition of the invention were withdrawn from the thermostat and washed with distilled water 2-3 times.

Then, the washed ascarid ovigerms were incubated for 30 days at a temperature of 24 - 26 °C. To determine the number of dead and viable ova, 200 ovigerms were observed by means of a microscope every 3 - 5 days. The death was determined by lack of ova development for 30 days up to the stage of a mobile larva and the presence of destructive morphological changes: shrinkage and deformation of embryos, rupture of shells. The known composition - carbathion was tested under the same conditions by adding a solvent. The percentage death of ova was estimated as a mean value of three results with a correction for ova death in the control and in comparison with the known composition. The test results of an ovocidal activity of the compound, according to the invention, are given in Table 7.

Table 7

Ovocidal activity of the composition, according to the invention in comparison with a known ovocidal composition

| No. | Composition of | % Death of ovigerms – Tests: laboratory | % Death of ovigerms – Tests: large-scale |
|---|---|---|---|
| 1 | Composition of the invention: Example 7 | 100 | 98 |
| 2 | Known ovocidal composition | 60 | 59 |
| 3 | Control | 0 | 0 |

## Industrial Applicability

The novel compounds of the invention, namely, trichlorophosphazocarbacyl derivatives, exhibit a biocidal activity and are the active principles of insecticidal, virucidal, nematocidal, fungicidal and ovocidal compositions which find application in medicine, veterinary and agriculture for controlling against synanthropic insects in living and industrial premises, at farms; for disinfection of implements, sishware, medicinal instruments, clothes, garbage, sewage water, as well as rooms of isolation hospitals, out-patient's clinics, veterinary surgeries, livings, farms and the like from bacteria, fungi, viruses, microorganisms and helminths; for control against widely spread pests of farm plants - phytopathogenic fungi and nematodes.

CLAIMS:

1. Trichlorophosphazocarbacyl derivatives of the general formula:

$$RCON=PX_3$$

wherein R is $CCl_3$, $C_6H_5$, para-$BrC_6H_4$; X is $OCH_2CH_2Cl$, $OC(CH_3)_2CCl_3$, $OCH(C_6H_5)CH_2Cl$;

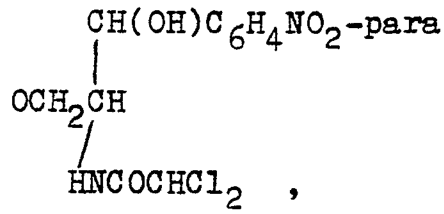

,

$HC_6H_4OCH_3$-ortho, $HC_6H_4OC_2H_5$-para; $NHC_6H_4Cl$-ortho, -meta, -para, $NHC_6H_4Br$-para; $NHC_6H_3NO_2$-ortho-Cl-para.

2. An insecticidal composition comprising an active principle and a solvent, c h a r a c t e r i z e d in that as an active principle it contains trichlorophosphazocarbacyl derivatives of the general formula:

$$RCON=PX_3$$

where R is $C_6H_5$, para-$BrC_6H_4$ ; X is $OCH_2CH_2Cl$, $OC(CH_3)_2CCl_3$, $NHC_6H_4OCH_3$-ortho, $NHC_6H_4Br$-para, according to Claim 1.

3. An insecticidal composition according to Claim 2, c h a r a c t e r i z e d in that it contains an active principle in an amount of 0.25 % by mass.

4. An insecticidal composition according to Claims 2 and 3, c h a r a c t e r i z e d in that as a solvent it contains a 5% solution of saccharose or glucose.

5. A virucidal composition comprising an active principle and a solvent, c h a r a c t e r i z e d in that as an active principle it contains trichlorophosphazobenzoyl derivatives of the general formula:

$$C_6H_5CON=PX_3$$

wherein X is $OCH(C_6H_5)CH_2Cl$,

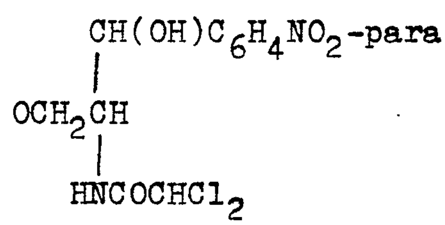

according to Claim 1.

6. A virucidal composition according to Claim 5, c h a r a c t e r i z e d in that it contains an active principle in an amount of 1 % by mass.

7. A virucidal composition according to Claims 5 and 6, c h a r a c t e r i z e d in that as a solvent it contains a 0.85% solution of sodium chloride.

8. A nematocidal composition comprising an active principle and a solvent, c h a r a c t e r i z e d in that as an active principle it contains tris-/2-chloro-1--phenylethoxy/phosphazobenzoyl of the following formula:

$$C_6H_5CON{=}P \begin{bmatrix} C_6H_5 \\ OCH \\ CH_2Cl \end{bmatrix}$$

9. A nematocidal composition according to Claim 8, c h a r a c t e r i z e d in that it contains an active principle in an amount of 1 % by mass.

10. A nematocidal composition according to Claims 8 and 9, c h a r a c t e r i z e d in that as a solvent it contains water.

11. A fungicidal composition comprising an active principle and a solvent, c h a r a c t e r i z e d in that as an active principle it contains trichlorophosphazocarbacyl derivatives of the general formula:

$$RCON{=}PX_3$$

wherein R is $CCl_3$, X is $NHC_6H_4OC_2H_5$-para; $HC_6H_4Cl$-ortho, -meta, -para, $NHC_6H_3NO_2$-ortho-Cl-para, according to Claim 1.

12. A fungicidal composition according to Claim 11, c h a r a c t e r i z e d in that it contains an active principle in an amount of 0.01 % by mass.

13. A fungicidal composition according to Claims 11 and 12, c h a r a c t e r i z e d in that as a solvent it contains water.

14. An ovocidal composition comprising an active principle and a solvent, c h a r a c t e r i z e d in that as an active principle it contains trichlorophosphazocarbacyl derivatives of the general formula:

$$RCON{=}PX_3$$

wherein R is $CCl_3$, $C_6H_5$;

X is $OCH(C_6H_5)CHCl$, 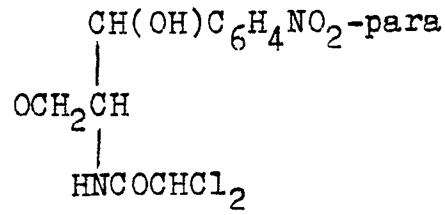

according to Claim 1.

15. An ovocidal composition according to Claim 14, c h a r a c t e r i z e d in that it contains an active principle in an amount of 2 - 3 % by mass.

16. An ovocidal composition according to Claims 14 and 15, c h a r a c t e r i z e d in that as a solvent it contains water.

Ammended Claims to International Application
JCT/SU 89/00005

1. Trichlorophosphazocarbacyl derivatives of the general formula:

$$RCON{=}PX_3$$

wherein R is $CCl_3$, $C_6H_5$; X is $OCH_2CH_2Cl$, $OC(CH_3)_2CCl_3$, $OCH(C_6H_5)CH_2Cl$; 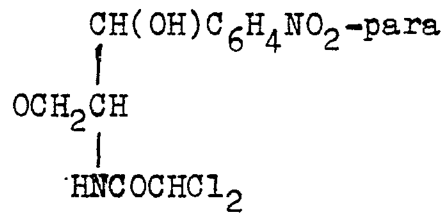

where when X is $NHC_6H_3NO_2$-ortho-Cl-para; R is para-$BrC_6H_4$.

2. An insecticidal composition comprising an active principle and a solvent, c h a r a c t e r i z e d in that as an active principle it contains trichlorophosphazocarbacyl derivatives of the general formula:

$$RCON{=}PX_3$$

wherein R is $C_6H_5$, X is $OCH_2CH_2Cl$, $OC(CH_3)_2CCl_3$, according to Claim 1.

3. An insecticidal composition according to Claim 2, c h a r a c t e r i z e d in that it contains an active principle in an amount of 0.25 % by mass.

4. An insecticidal composition according to Claims 2 and 3, c h a r a c t e r i z e d in that as a solvent it contains a 5% solution of saccharose and glucose.

5. A virucidal composition comprising an active principle and a solvent, c h a r a c t e r i z e d in that as an active principle it contains trichlorophosphazobenzoyl derivatives of the general formula:

$$C_6H_5CON{=}PX_3$$

wherein X is $OCH(C_6H_5)CH_2Cl$, 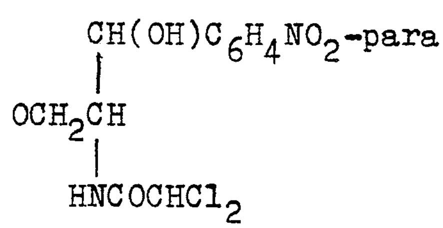

according to Claim 1.

6. A virucidal composition according to Claim 5, c h a r a c t e r i z e d in that it contains an active principle in an amount of 1 % by mass.

7. A virucidal composition according to Claims 5 and 6, c h a r a c t e r i z e d in that as a solvent it contains a 0.85% solution of sodium chloride.

8. A nematocidal composition comprising an active principle and a solvent, c h a r a c t e r i z e d in that as an active principle it contains tris-/2-chloro-1-phenylethoxy/phosphazobenzoyl of the following formula:

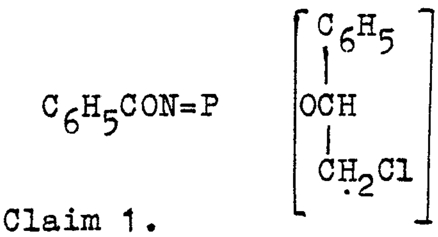

according to Claim 1.

9. A nematocidal composition according to Claim 8, c h a r a c t e r i z e d in that it contains an active principle in an amount of 1 % by mass.

10. A nematocidal composition according to Claims 8 and 9, c h a r a c t e r i z e d in that as a solvent it contains water.

11. A fungicidal composition comprising an active principle and a solvent, c h a r a c t e r i z e d in that as an active principle it contains trichlorophosphazocarbacyl derivatives of the general formula:

$$RCON{=}PX_3$$

wherein R is para-$BrC_6H_4$, X is $HCH_3NO_2$-ortho-Cl-para, according to Claim 1.

12. A fungicidal composition according to Claim 11, c h a r a c t e r i z e d in that it contains an active principle in an amount of 0.01 % by mass.

13. A fungicidal composition according to Claims 11 and 12, c h a r a c t e r i z e d in that as a solvent it contains water.

14. An ovocidal composition comprising an active principle and a solvent, c h a r a c t e r i z e d in that as

an active principle it contains trichlorophosphazocarbacyl derivatives of the general formula:

$$RCON{=}PX_3$$

wherein R is $CCl_3$, $C_6H_5$; X is $OCH(C_6H_5)CH_2Cl$,

$CH(OH)C_6H_4NO_2$-para
|
$OCH_2CH$
|
$HNCOCHCl_2$

according to Claim 1.

15. An ovocidal composition according to Claim 14, c h a r a c t e r i z e d in that it contains an active principle in an amount of 2 - 3 % by mass.

16. An ovocidal composition according to Claims 14 and 15, c h a r a c t e r i z e d in that as a solvent it contains water.

# INTERNATIONAL SEARCH REPORT

International Application No PCT/SU 89/00005

**I. CLASSIFICATION OF SUBJECT MATTER** (if several classification symbols apply, indicate all) [6]

According to International Patent Classification (IPC) or to both National Classification and IPC

CIB$^5$ : C07F 9/09, 9/24, A01N 57/28, 57/30, A61K 31/675

**II. FIELDS SEARCHED**

Minimum Documentation Searched [7]

| Classification System | Classification Symbols |
|---|---|
| CIB$^4$ | C07F 9/09, 9/24, A01N 57/28, 57/30, A61K 31/675 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | Zhurnal obschei khimii vol. XLII (CIV), vyp. 4, 1972 (Nauka, Leningrad), V.P. Rudavsky et al. "Fosforilirovannye proizvodnye trikhloruksusnoi kisloty", see pages 797-801 -- | 1 |
| Y | Khimicheskaya tekhnologia N° 1 (55), 1971, (Naukova dumka, Kiev), V.P. Rudavsky et al. "Nekotorye proizvodnye trikhlor - u bis - trikhlorfosfazogaloidkarbatsilov", see pages 19-23 -- | 1 |
| Y | Fiziologicheski aktivnye veschestva, sbornik, vypusk 4, 1972, Naukova dumka, (Kiev), E.A. Shomova et al. "Fungitsidnaya aktivnost triamidofosfazogaloidkarbatsilov", see pages 15-17 -- | 1,11 |
| A | Referativny zhurnal "Khimia", 19I, N°18, 1981, see page 55, column 2, abstract N° 180297, V.P. Rudavsky "Biskhlorfosfazoiminoatsily", "Khim. tekno", (Kiev), 1980, N°6, pages 63-64 -- | 2-16 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 27 September 1989 (27.09.89) | 12 October 1989 (12.10.89) |
| International Searching Authority | Signature of Authorized Officer |
| ISA/SU | |

International Application No. PCT/SU 89/00005

III. DOCUMENTS CONSIDERED TO BE RELEVANT (CONTINUED FROM THE SECOND SHEET)

| Category * | Citation of Document, with indication, where appropriate, of the relevant passages | Relevant to Claim No |
|---|---|---|
| A | SU, Al, 666810 (Institut Organicheskoi Khimii AN Ukrainskoi SSR), 25 February 1980, see the claims | 2-4,11,12 |
| A | SU, Al, 276621 (K.A. Abramova et al.) 16 December 1970, see the claims | 2-16 |